Europäisches Patentamt

European Patent Office

Office européen des brevets

(19)

(11) Numéro de publication: **0 210 936
B1**

(12) **FASCICULE DE BREVET EUROPEEN**

(45) Date de publication du fascicule du brevet:
**18.10.89**

(21) Numéro de dépôt: **86420201.5**

(22) Date de dépôt: **21.07.86**

(51) Int. Cl.⁴: **F16K 11/083,** F28G 1/12

(54) **Permutateur rotatif muni d'un boisseau conique à déplacement axial.**

(30) Priorité: **26.07.85 FR 8511918**

(43) Date de publication de la demande:
**04.02.87 Bulletin 87/6**

(45) Mention de la délivrance du brevet:
**18.10.89 Bulletin 89/42**

(84) Etats contractants désignés:
**DE GB IT NL**

(56) Documents cités:
**FR-A- 1 280 109
FR-A- 1 433 455
US-A- 3 908 697
US-A- 4 286 625**

(73) Titulaire: **ALUMINIUM PECHINEY, 23, rue Balzac,
F-75008 Paris Cédex 08(FR)**

(72) Inventeur: **Barra, Jean, Lou Ciaou,
F-13120 Gardanne(FR)**

(74) Mandataire: **Pascaud, Claude et al, PECHINEY 28, rue de
Bonnel, F-69433 Lyon Cédex 3(FR)**

**Description**

## DOMAINE TECHNIQUE DE L'INVENTION

L'invention concerne un permutateur sur lequel la rotation du boisseau, permettant le changement de la distribution, se fait après que le boisseau ait été soulevé pour être dégagé du corps de façon à ne nécessiter qu'un couple de manoeuvre faible et à ne pas risquer la destruction des joints au passage des ouvertures du corps.

L'utilisation de ce permutateur se rapporte au domaine technique des robinets, des vannes et des distributeurs.

Suivant ses liaisons aux appareils qu'il dessert, ce permutateur permet sur au moins deux courants de fluides, et sans qu'il soit nécessaire d'arrêter l'écoulement des fluides dans chacun des circuits:
- de permuter les fluides dans les circuits sans en changer le sens de circulation.
- d'inverser le sens de circulation des fluides dans chacun des circuits, sans permuter les fluides.
- de permuter les fluides dans les circuits en inversant le sens de circulation dans chacun des circuits.

## ETAT DE LA TECHNIQUE

Pour modifier la destination ou l'orientation d'un fluide dans un réseau de canalisations ou pour affecter temporairement une canalisation à un fluide différent, on utilise généralement des obturateurs tels que joints pleins, robinets, vannes, distributeurs, etc... La manoeuvre de certains de ces obturateurs et les impératifs technologiques des appareils desservis peuvent nécessiter l'arrêt préalable de la circulation du fluide dans les canalisations affectées.

Avec la complexité des circuits sur des appareils tels que des échangeurs multiples, filtres à contre-courant, et aussi dans le cas de distribution sur des files d'appareils nécessitant des alimentations intermittentes, on voit grandir le nombre d'obturateurs. L'incidence est grande sur le temps nécessaire aux manoeuvres et sur le coût de l'installation, essentiellement lorsqu'il s'agit de canalisations de grand diamètre, supérieur à 200 mm par exemple.

Il est parfois nécessaire de rajouter des obturateurs pour isoler à chacune de leurs extrémités les circuits momentanément désaffectés, notamment lorsque ces derniers présentent une assez grande longueur et que les fluides véhiculés donnent lieu à des dépôts.

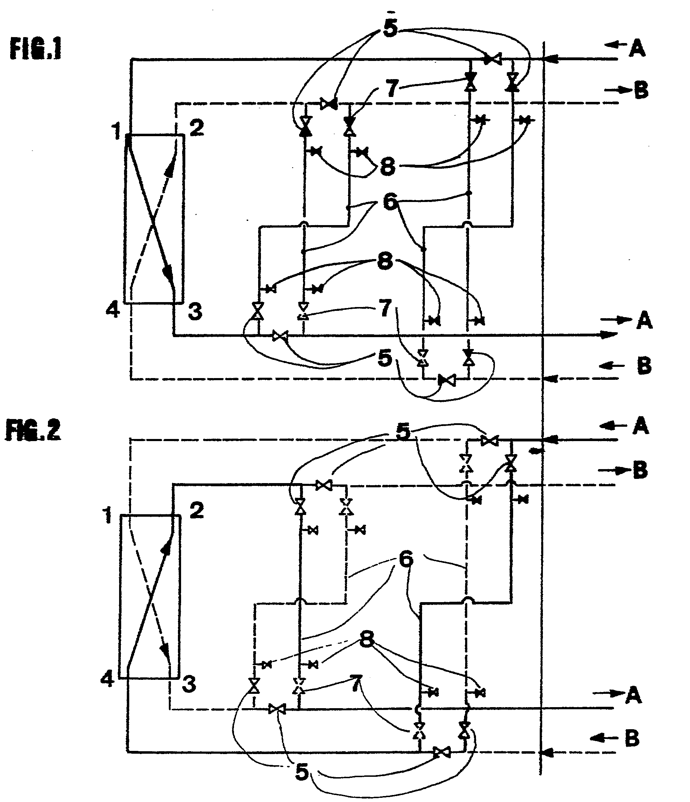

Les figures 1 à 2 se rapportent à l'art antérieur. Elles donnent le schéma de distribution par des obturateurs tels que des robinets ou vannes sur un échangeur tubulaire acceptant des écarts importants de pression et où il est nécessaire de permuter les fluides A et B dans l'échangeur sans en changer pour autant le sens de circulation.

. Sur la figure 1 : le fluide A rentre en 1, sort en 3, le fluide B rentre en 4, sort en 2.
. Sur la figure 2 , après qu'ait été faite la manoeuvre sur les différents obturateurs,

le fluide A rentre en 4, sort en 2
le fluide B rentre en 1, sort en 3

Dans ce cas, où aucune contrainte de procédé ou de technologie ne s'oppose à leur utilisation, on voit qu'il est nécessaire de disposer de 8 obturateurs (5) pour satisfaire sur le circuit les deux cas de fonctionnement, suivant fig.1 et 2.

Si les fluides véhiculés risquent de colmater des tuyauteries de liaison (6) d'assez grande longueur, il sera nécessaire de placer des obturateurs supplémentaires (7) identiques à ceux repérés (5). Enfin, le plus souvent, il est nécessaire de prévoir sur ces tuyauteries de liaison des robinets de vidange et de lavage (8) d'une dimension inférieure à celle des obturateurs (5) et (7). Donc jusqu'à vingt organes de sectionnement peuvent être nécessaires sur une telle installation.

Il est connu que des distributeurs rotatifs ou rectilignes à plusieurs voies remplacent deux, quatre obturateurs et quelquefois plus et que ces distributeurs peuvent être manoeuvrés sans qu'il soit nécessaire d'arrêter la circulation dans les canalisations qu'ils affectent.

Lorsque cette période transitoire n'est pas acceptée par l'appareil qu'ils desservent, ou encore lorsque des arrêts sur les circuits d'alimentation ne sont pas tolérés par le procédé, l'utilisateur a recours à un synchronisme ou à un jumelage mécanique des obturateurs ou distributeurs de façon à agir simultanément sur l'amont et sur l'aval. Ceci nécessite quelquefois un dimensionnement particulier des passages dans l'obturateur ou le distributeur et un léger décalage de la manoeuvre de l'un et de l'autre pour éviter, si c'est souhaitable, une montée en pression résiduelle passagère durant la manoeuvre.

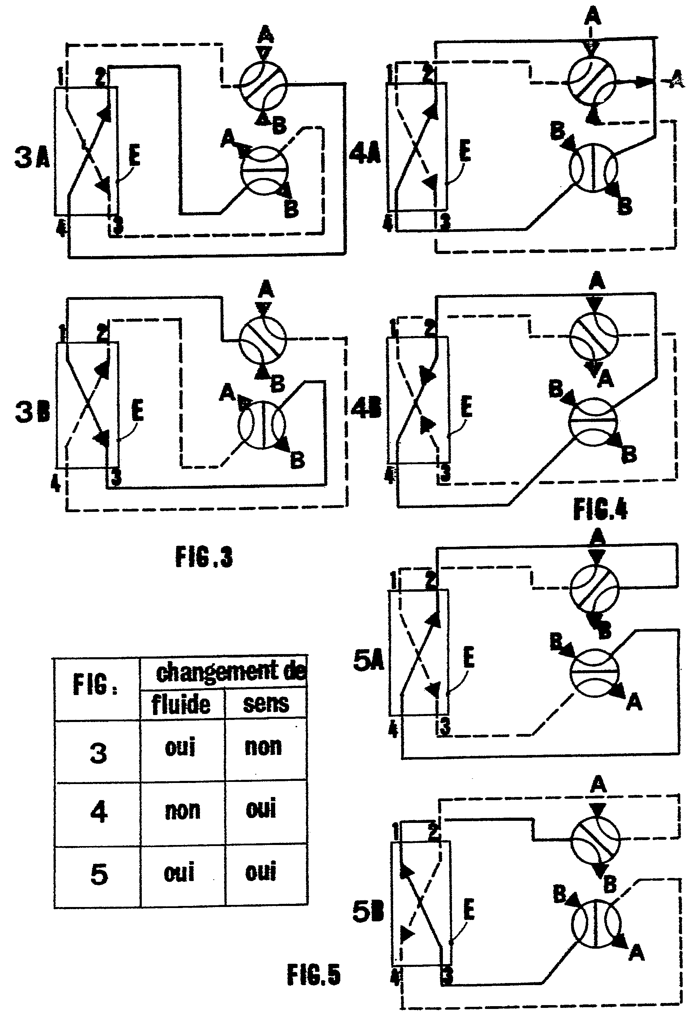

Les figures 3, 4 et 5 qui se réfèrent également à l'art antérieur représentent un schéma de distibution par des distributeurs rotatifs sur un échangeur de chaleur à plaques, dans lequel l'écart de pression toléré de part et d'autre des plaques est inférieur à la pression de fonctionnement. C'est dire qu'un côté de la plaque quel qu'il soit, ne pourra pas être alimenté si l'autre côté ne l'est pas aussi.

. Sur la figure 3A : le fluide A entre en 1, sort en 3 le fluide B entre en 4, sort en 2
Sur la figure 3B, après qu'ait été faite la manoeuvre sur les distibuteurs,
: le fluide A entre en 4, sort en 2
: le fluide B entre en 1, sort en 3

La manoeuvre successive des distributeurs n'est pas permise car on risque de créer dans l'échangeur un écart de pression de part et d'autre des plaques, équivalent à la pression de fonctionnement donc supérieur à l'écart toléré. Il faut alors manoeuvrer simultanément les deux distributeurs pour passer sans "à-coup" et sans variation notable des caractéristiques des circuits, de la position A à la position B des figures 3, 4 et 5. Ceci peut se faire manuellement avec les risques que cela représente, mais on peut aussi imaginer une liaison électrique hydraulique ou mécanique des deux distributeurs.

Les figures 4 et 5 représentent respectivement des cas d'affectation de distributeurs, jumelés ou non avec lesquels il est possible:
- d'inverser le sens de circulation des fluides, sans les permuter,
- de permuter les fluides dans les circuits en inversant le sens de circulation dans chacun des circuits.

En ce qui concerne particulièrement les distributeurs rotatifs, le couple nécessaire à la manoeuvre de l'organe mobile, généralement appelé boisseau, est d'autant plus élevé que sa taille est grande, que le fluide qui transite n'a pas de qualité lubrifiante mais au contraire une tendance à la formation de dépôts, et aussi que le temps écoulé entre deux manoeuvres consécutives est plus long. Dans les distributeurs jumelés, ce couple se multiplie par le nombre de jumelages.

La manoeuvre d'un boisseau métallique dans un corps également métallique est plus difficile, jusqu'à devenir impossible dans le cas d'utilisation sur des fluides chauds, car le boisseau plus exposé à la température que ne l'est le distributeur accusera une dilation thermique supérieure à celle du corps supprimant entre eux le jeu nécessaire à la rotation du boisseau.

Il existe des palliatifs tels que revêtement intégral du boisseau ou du corps de distributeur par divers produits plastiques ayant un bon coefficient de frottement et une faible adhésivité aux liquides véhiculés, l'épaisseur du revêtement étant capable d'absorber les dilations thermiques sans augmentation sensible du couple de manoeuvre et aussi des systèmes de lubrification du boisseau pas toujours satisfaisants, surtout lorsque les boisseaux sont d'assez grosse taille.

Des dispositifs à boisseaux sphériques sont connus. Ils conduisent à des couples de manoeuvre moins élevés que les boisseaux cylindriques ou coniques, mais un boisseau sphérique dans un logement obligatoirement cylindrique du corps du distributeur fait apparaître des zones mortes où s'accumulent les particules en suspension dans le liquide véhiculé si celui-ci en contient et lorsque de plus, ce liquide est entartrant ou colmatant, la manoeuvre du boisseau devient difficile et quelquefois impossible si des moyens de nettoyage de ces zones mortes n'ont pas été prévus.

Si l'on considère à présent les étanchéités possibles sur un boisseau ou sur le corps de distributeur on voit qu'il faut distinguer:
– l'étanchéité vis à de l'extérieur
– l'étanchéité "intercommunication" entre les différents courants de fluides.

Nous avons vu précédemment que l'étanchéité peut se faire par contact métal sur métal ou par un revêtement intégral du boisseau ou du corps. Mas elle pourrait tout aussi bien être effectuée par des joints particuliers placés autour des ouvertures aménagées dans le boisseau, par ou transite le fluide pour passer de l'une à l'autre des tubulures du corps.

Ces joints particuliers dont le principe est basé sur une assez grande déformation plastique du matériau qui les constitue donnent une meilleure étanchéité que les revêtements intégraux, de plus, ils ne nécessitent pas de précision tant au point de vue usinage que déformation.

Ainsi le document US-A 4 286 625 décrit un permutateur à boisseau conique dont l'étanchéité entre le corps du permutateur et le boisseau est assurée par des joints déformables placés dans des gorges de maintien situées à la périphérie de la cloison et des platines supérieures et inférieures du boisseau. Par ailleurs, un mécanisme assure le déplacement du boisseau selon un axe vertical ainsi que sa rotation autour de ce même axe vertical permettant l'enfoncement et le positionnement corrects du boisseau par rapport aux tubulures du corps du permutateur.

Cependant, durant la manœuvre, l'ecrasement des joints contre le corps du permutateur par le boisseau arrivant en position basse n'est ni contrôlé, ni règlable et de ce fait le risque de détérioration des joints, après un certain nombre de manœuvres de permutation, demeure. Ce risque est encore accru lorsque les produits véhiculés sont des suspensions de matières plus ou moins abrasives qui peuvent se déposer et s'incruster à la surface des joints et tout celà au détriment de l'étanchéité. Enfin, en cas de fuite au niveau d'un joint le passage du liquide se fait obligatoirement dans le compartiment adjacent conduisant inévitablement à un mélange de produits, qui même détecté rapidement, peut s'avérer très onéreux en terme de côut d'exploitation.

## PROBLÈMES TECHNIQUES À RESOUDRE

Compte tenu de ce que l'on vient d'exposer, il est indispensable, pour réaliser dans des conditions économiques satisfaisantes la distribution de plusieurs courants de fluides distincts sans risque de perte ou de mélange de ces fluides par défaut d'étanchéité des circuits de transfert, de disposer de permutateurs conservant, notamment au niveau de leurs joints, une très bonne étanchéité même après de nombreuses manœuvres de permutation et permettant à la fois de détecter instantanément toute fuite de produit et à la fois d'en assurer l'évacuation.

Dans tout ce qui suit nous conviendrons de désigner par les termes:

Permutateur: l'ensemble du dispositif qui permet d'intervertir, de "permuter" les fluides dans les circuits de l'appareil ou des appareils qu'il alimente, ou la direction du sens de circulation des fluides à l'intérieur de l'appareil qu'il alimente ou encore les deux simultanémement.

Boisseau: la partie mobile qui par sa rotation assure la permutation, la distribution des fluides.

Corps: l'enveloppe à l'intéieur de laquelle est placé le boisseau et permet conjointement au boisseau de réaliser les étanchéités intercommunications. Elle comporte les différentes tubulures d'entrée et de sortie des fluides distribués selon la position du boisseau.

Voies: les couples entrées/sorties que présente le permutateur sur un étage dans les différentes positions du boisseau.

Etage: chaque groupe de voies situées dans un même plan perpendiculaire à l'axe du boisseau et du corps.

Orientation: le nombre de positions possibles pour un révolution du boisseau. A chacune d'elles correspondent des voies, différentes les unes des autres.

Distribution: représentation symbolique des voies par étage. Elle peut être en "L" en "T" ou en "X" avec 2 voies 3 voies ou 4 voies.

Fenêtre: ouverture aménagée dans le boisseau pour constituer la voie permettant le transfert du fluide d'une tubulure à l'autre du corps.

Etanchéité et contrôle des fuites: l'ensemble des joints équipant le boisseau, joints de forme appropriée pour assurer l'étanchéité autour de chaque fenêtre et permettre de visualiser les fuites externes et intercommunications.

Mécanisme de commande: le dispositif maintenu sur une console et permettant la manœuvre du boisseau et le réglage.

Console: armature métallique solidaire du corps sur laquelle est disposé le mécanisme de commande du boisseau.

## OBJET DE L'INVENTION

L'objet de l'invention est un permutateur permettant d'améliorer très sensiblement la longévité des joints déformables et d'assurer un contrôle permanent et instantané de l'étanchéité de ces joints ainsi que l'évacuation du liquide en cas de fuite sans risque de mélange avec les produits des compartiments voisins et cela grâce, d'une part à un moyen de contrôle et de réglage de la déformation des joints d'étanchéité atténuant ainsi les effets de cisaillement consécutifs à des efforts d'écrasement excessifs et répétés des joints élastomères, et d'autre part à une forme appropriée des joints permettant aussi bien de détecter un défaut d'étanchéité et d'évacuer le liquide de fuite que d'effectuer un rinçage des surfaces des joints en vue d'éliminer les dépôts éventuels de matières solides.

Plus précisément, l'invention est un permutateur à boisseau conique permettant de modifier l'alimentation de l'appareil auquel il est affecté en inversant les fluides dans les conduits, ou en inversant le sens de circulation des fluides dans les conduits ou les deux simultanément, sans nécessiter l'arrêt des courants de fluides et sans provoquer de mélange notable des différents fluides au moment de la permutation et comportant:

— Un corps principal creux, de révolution, muni d'une pluralité de tubulures d'entrée et de sortie des fluides destinés à être raccordées à des appareils par des canalisations d'arrivée et de départ desdits fluides, ce corps principal étant muni sa partie supérieure, d'une plaque de fermeture permettant la mise en place au boisseau et à sa partie inférieure d'un fond fermé.

— Un boisseau conique de révolution ayant la même conicité que l'intérieur du corps principal, l'axe du corps et du boisseau étant confondus, ledit boisseau étant fermé à ses extrémités par des platines supérieure et inférieure et comportant au moins un étage de permutation constitué par une pluralité de fenêtres coopérant avec l'ouverture des tubulures du corps et au moins une cloison interne délimitant au moins deux espaces distincts constituant les voies de l'étage permettant la circulation interne des fluides sans communication entre eux.

— Un moyen de déplacement du boisseau selon son axe vertical pour permettre l'enfoncement et le dégagement dudit boisseau de la paroi interne du corps.

— Un moyen de rotation du boisseau autour de son axe vertical pour permettre le changement d'orientation.

— Un moyen d'étanchéité disposé autour des fenêtres du boisseau, caractérisé en ce que le moyen d'étanchéité du boisseau dans le corps principal est un joint élastomère à double portée ayant la forme générale d'un U, les parties extérieures du U s'appuyant sur les faces internes des gorges de même forme où il est adhérisé, l'extrémité de chacune des branches du U formant les portées et coopérant avec l'appui sur la paroi intérieure du corps pour assurer l'étanchéité autour de chaque fenêtre, la partie intérieure en U formant un canal collecteur des fuites vers l'espace aménagé à la partie inférieure du corps, et en ce que le moyen de déplacement axial supporté par une console fixée à un couvercle fermant la partie supérieure du corps, est un ensemble de 4 couples de biellettes formant un double quadrilatère dont 2 couples de biellettes sont plus courtes ques les 2 autres pour obtenir une position de verrouillage irréversible.

Ainsi le joint d'étanchéité constitue par sa forme une étanchéité vis à vis des zones inférieure et supérieure du corps, étanchéité qui est interrompue sur de courtes portions sur la périphérie extérieure des platines elle même munie d'entailles pour former la continuité du canal entre les zones inférieure et supérieure, pour l'évacuation des fuites et du liquide de rinçage vers l'extérieur du corps par un robinet au point bas.

Dans le cas d'un boisseau à deux étages superposés, sans communication interne entre eux, chaque étage du corps comporte qatre tubulures disposées à 90° coopérant avec les quatre fenêtres de l'étage correspondant du boisseau, les deux étages du boisseau étant séparés entre eux par une platine disposée perpendiculairement à l'axe de rotation. De préférence, dans le cas d'un permutateur à deux étages, les axes de tubulures d'un étage font un angle de 45° avec les axes des tubulures de l'autre étage.

En outre, le boisseau comporte, sur la périphérie des platines supérieures et inférieures, sur la périphérie de chaque platine de séparation entre étages, et sur les extrémités des cloisons internes, séparant les espaces distincts de circulation des fluides, un joint d'étanchéité en élastomère disposé dans une gorge.

Les détails de l'invention vont maintenant être décrits en cinq parties: le corps, le boisseau, l'étanchéité, le mécanisme de rotation et le mécanisme de relevage et d'enfoncement du boisseau.

## DESCRIPTION DES FIGURES

Les figures 1 à 5 concernent l'art antérieur et ont déjà été décrites

Les figures 6 à 25 illustrent l'invention.

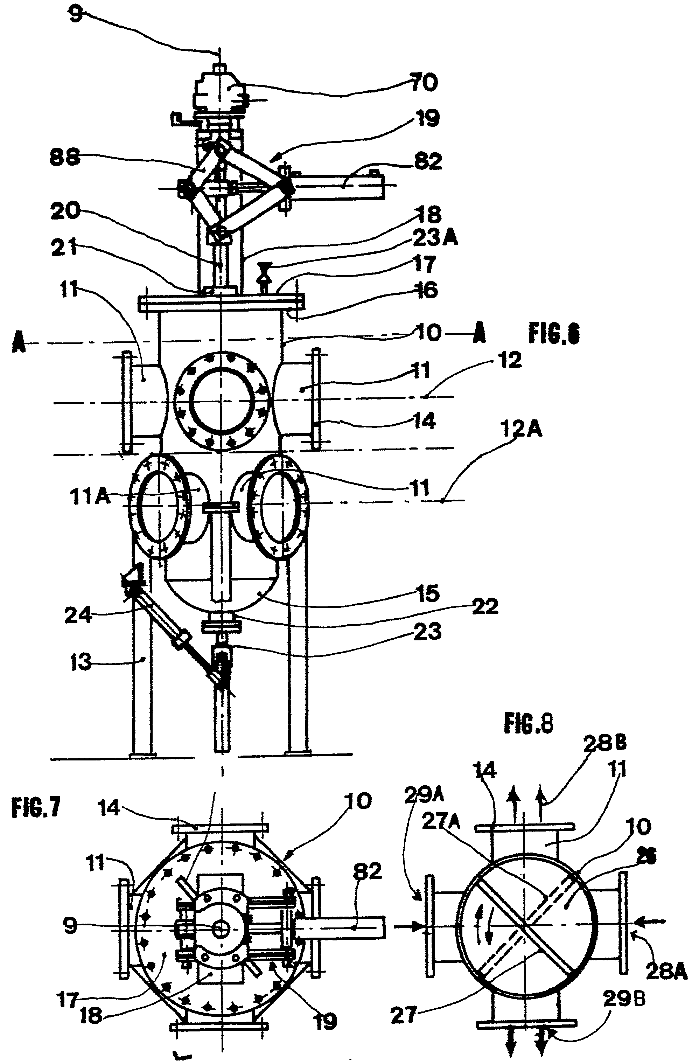

La figure 6 représente une vue d'ensemble d'un permutateur à deux étages selon l'invention.

La figure 7 est une vue de dessus et la figure 8 une coupe de la figure 6 selon AA.

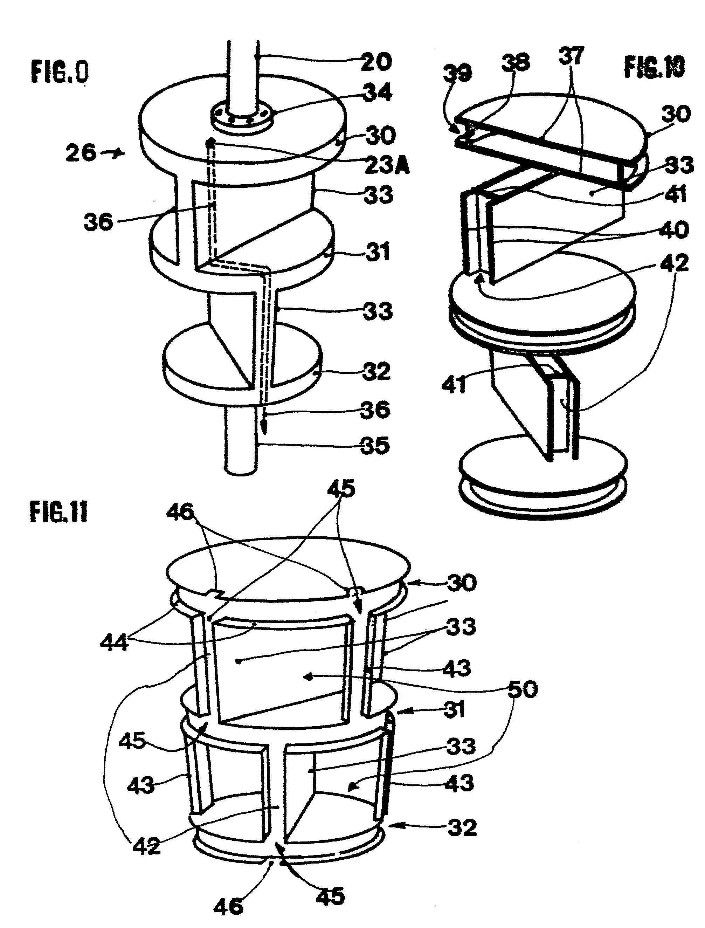

Les figures 9, 10 et 11 montrent les détails de construction et d'assemblage du boisseau.

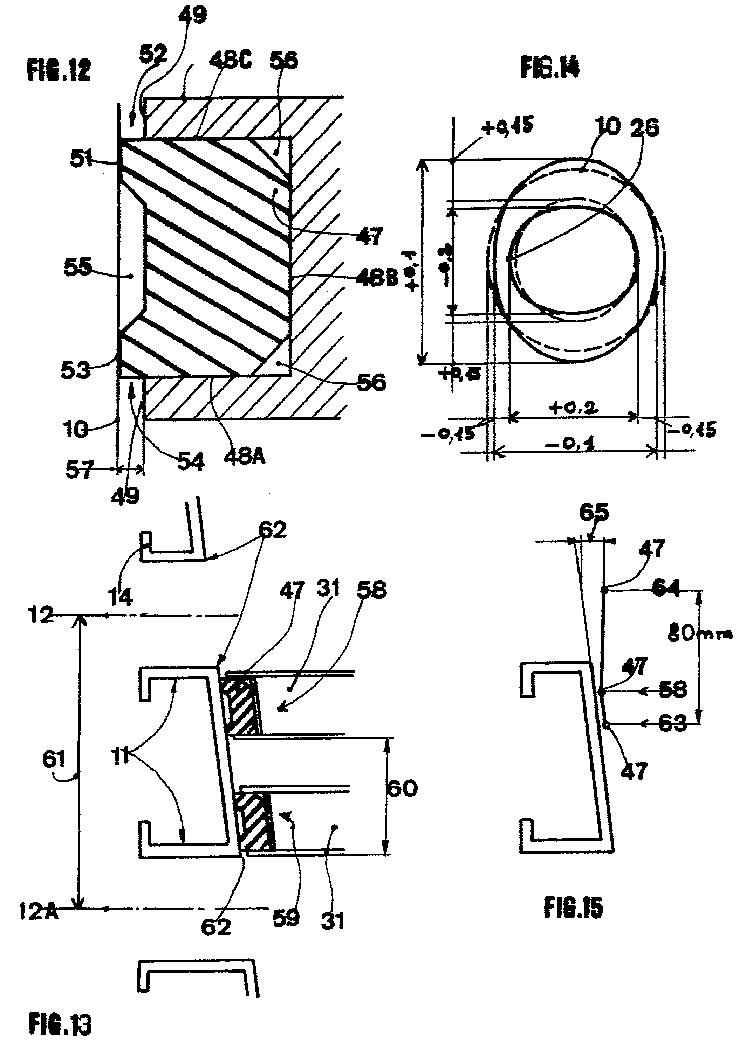

Les figures 12, 13, 14 et 15 se rapportent au joint d'étanchéité disposé sur le boisseau.

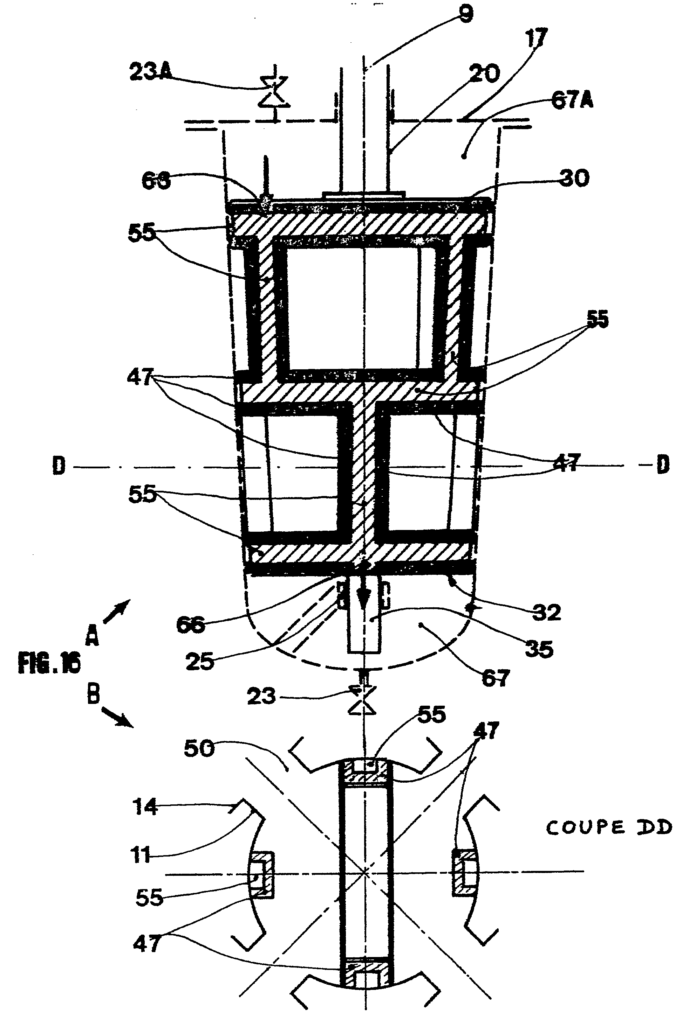

Les figures 16A et B sont des vues du boisseau muni de ses joints d'étanchéité.

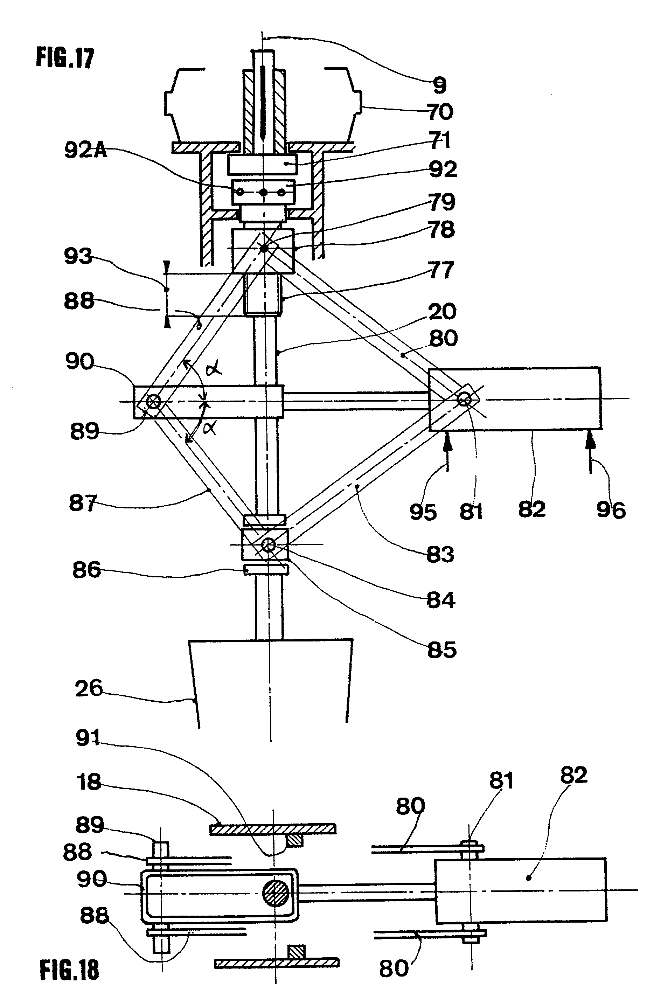

Les figures 17, 18, 19 et 20 sont relatives au mécanisme de déplacement du boisseau le long de son axe vertical.

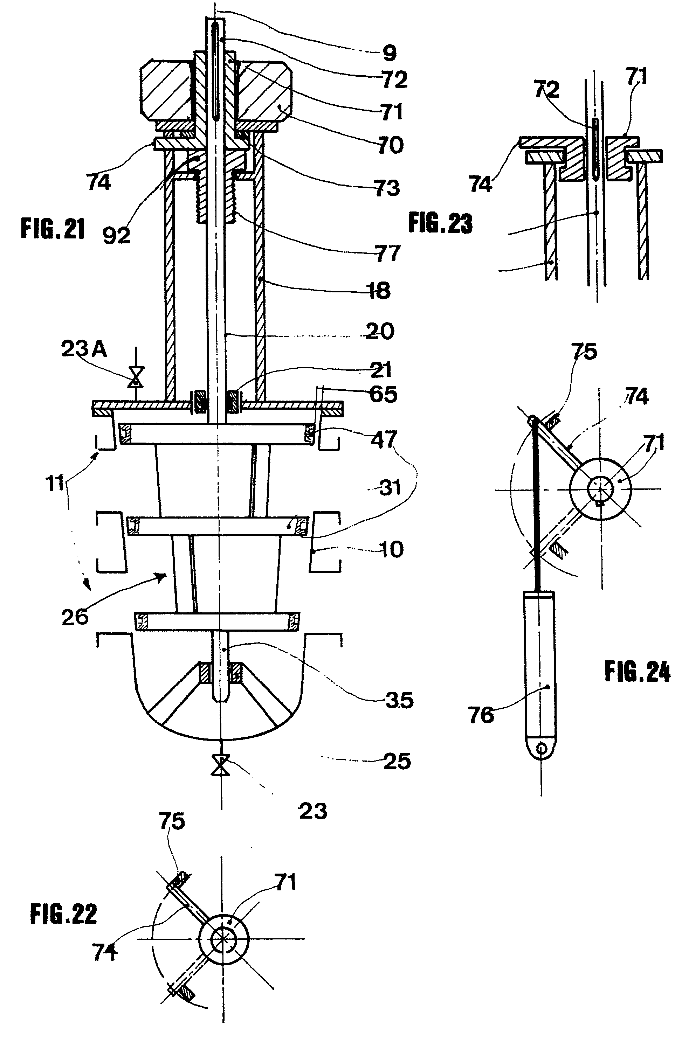

Les figures 21 à 24 montrent le dispositif de rotation du boisseau autour de son axe vertical.

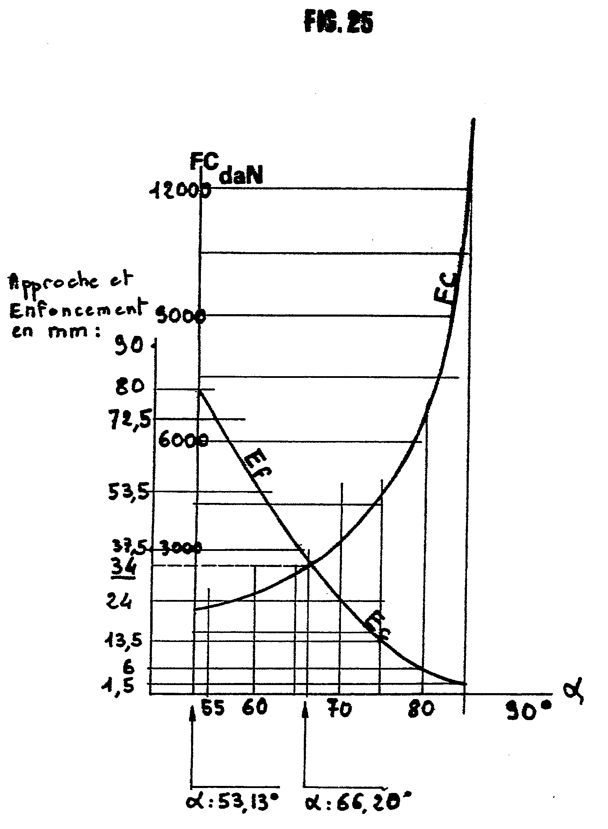

La figure 25 donne la capacité du dispositif d'enfoncement du boisseau dans le corps du permutateur.

La figure 6 donne la vue générale d'un permutateur sur pieds, selon l'invention, placé en position verticale, disposant de deux étages à quatre voies avec son mécanisme de commande.

### 1. Le corps (10)

réalisé en un matériau répondant aux exigences physicochimiques des fluides véhiculés, est usiné conique intérieurement. Pour les cas d'utilisation sur des produits contenant près de 200 grammes par litre de soude caustique à des températures pouvant atteindre 100°C, qui étaient à l'origine de l'invention, les métaux ferreux conviennent parfaitement.

Ce corps comporte une pluralité de tubulures (11), celles situées sur un même plan constituant les entrées et les sorties des fluides transitant par un étage; les deux niveaux de tubulures (12) et (12A) (sur la figure 6) montrent que ce permutateur dispose de deux étages. Pour des raisons de construction du corps et également pour faciliter la disposition des conduites raccordées au permutateur, les tubulures (11) du second étage (12A) sont décalées de 45° par rapport à celles du premier étage (12). Dans le cas représenté, ces tubulures comportent des brides (14) pour le raccordement aux conduites.

Le corps, à sa partie inférieure, côté petit diamètre du cone est muni d'un fond qui peut être soudé (15); la partie supérieure du corps, côté grand diamètre dispose d'une bride (16) recevant un couvercle (17). Sur ce couvercle, maintenu à la bride du corps par une série de boulons, est fixée la console (18) qui supporte l'ensemble du mécanisme de commande (19) boisseau qui sera décrit plus loin. Le boisseau, situé à l'intérieur du corps, n'est pas visible sur cette figure 6. il est relié au mécanisme de commande par l'intermédiaire de l'axe (20). L'axe (20) traverse le couvercle (17) par une garniture étanche (21).

A la dépose du couvercle (17), l'ensemble mobile mécanisme de commande (19) et le boisseau peut être extrait d'un bloc du corps pour être par exemple, remplacé par un ensemble de rechange. Il faut noter que l'axe de rotation du boisseau et l'axe du corps sont confondus en un axe commun (9). Le fond inférieur (15) comporte une tubulure (22) munie d'un robinet (23) commandé par un vérin (24) ouvert pour permettre la mise en évidence des fuites. A l'intérieur du corps, le fond inférieur comporte une crapaudine (25) qui apparaît sur la figure (21). Sur le couvercle supérieur est prévu un robinet (23 A) pour procéder au lavage intérieur du permutateur après le changement d'orientation du boisseau (26). Dans le cas représenté figure 6, le permutateur est supporté par des pieds (13). La figure 7 montre une vue de dessus du permutateur, on aperçoit les tubulures (11) et leurs brides (14), le couvercle supérieur (17) la console (18) supportant le mécanisme de commande (19).

La figure 8 est une coupe de l'appareil passant par le plan médian AA au-dessus des tubulures (11); la cloison du boisseau (26) est positionnée en (27) pour établir deux voies 28A 28B et 29A 29B.

Sur la figure 8 le boisseau a été déplacé de 90° de la position (27) à la position (27A) en pointillés pour établir deux voies différentes 28A 29B et 29A 28B

### 2°) Le boisseau

Les figures 9, 10 et 11 schématisent le boisseau destiné à un permutateur à 2 étages de 4 voies selon la représentation de la figure 6. Selon la figure 9, il se compose d'une platine supérieure (30), d'une platine intermédiaire (31) et d'une platine inférieure (32). Les platines sont reliées entre elles par des cloisons planes (33). L'axe de commande de manoeuvre (20) du boisseau (26) est positionné et fixé par une bride (34), intégrée à la platine supérieure; la platine inférieure reçoit une rallonge (35) qui, avec l'axe de manoeuvre (20) maintiendront le boisseau centré dans le corps au moment des manoeuvres qui se font le plus souvent sans stopper les courants de fluides. Un conduit (36) traversant l'intérieur du boisseau permet l'évacuation du liquide de lavage introduit à la partie supérieure du corps par le robinet (23A) évacué par le robinet (23) placé sur le fond (15) (figure 6) Le boisseau peut être réalisé en tôle d'acier soudée dont la qualité sera choisie en fonction des exigences physico-chimiques du produit véhiculé.

La figure 10 représente dans sa partie supérieure une platine (30) coupée par un plan passant par son axe de révolution. Une platine se compose de deux disques de tôle (37) et d'une virole cylindrique (38) reliant ces deux disques de tôle. Le diamètre de la virole (38) est plus petit que le diamètre extérieur des disques (37), ceci pour aménager à la périphérie de la platine une gorge rectangulaire (39) de grandes dimensions dans laquelle sera placé le joint d'étanchéité.

La cloison (33) est constituée de deux plaques de tôle (40) reliées entre elles par des entretoises (41). Comme pour la platine, les entretoises (41) sont fixées par soudure en retrait des chants latéraux des tôles (40) pour constituer une gorge rectangulaire de grandes dimensions (42) dans laquelle sera placé un joint double étanchéité (47) (figure 12).

L'ensemble de la figure 10 montre la composition du boisseau, dont les différents éléments sont reliés ensuite par soudure en respectant la position relative des cloisons indiquée sur les figures 10 et 11.

La figure 11 représente le boisseau (26) dans sa conception d'ensemble à partir des éléments qui le composent, platines (30) et (31) et (32) cloisons (33). On aperçoit à chaque étage deux barres (43) formant un profil creux aux dimensions des gorges (42). L'intérêt de cette barre est double: elle relie entre elles les deux platines d'un étage pour améliorer la tenue mécanique du boisseau assemblé et elle reçoit également un joint (47) qui maintiendra propre sur le corps la portée de joint non employée pour une orientation donnée du boisseau (figure 16B).

Les éléments de disques (37) constituant les platines qui interceptent les gorges rectilignes (42) que présentent les cloisons (33) et les barres (43) sont découpées en (45) au profil de la gorge (42) pour obtenir la continuité dans les gorges, qui permettra le jonctionnement des joints aux raccordements.

Une fois constitué par soudure et détensionné le boisseau est pris sur une machine-outil pour obtenir la conicité correcte sur les différents disques (37), sur les chants des tôles de cloison (40) et sur les barres (43). Les gorges circulaires et rectilignes sont également usinées pour recevoir le joint dans les meilleures conditions. C'est à ce moment là que disparaissent les éléments de disques (46).

Au moment de l'usinage, les disques extérieurs (37) des platines (30) et (32) sont entaillés en (46) pour laisser le passage à d'éventuelles fuites et au liquide de lavage introduit par le robinet (13A).

3°) L'Etanchéité entre le corps et le boisseau

La périphérie des platines et les extrémités latérales des cloisons sont inscrites dans un cone de révolution délimitant le boisseau.

L'espace libre, ou vide, du cone de révolution inscrit au boisseau, délimité par les platines à la partie inférieure et à la partie supérieure et par les extrémités latérales de la cloison constituent la "fenêtre" (50) dans le boisseau, fenêtre autour de laquelle il sera nécessaire d'obtenir une étanchéité.

Les platines (30), (31), (32), les cloisons (33) de forte épaisseur qui composent le boisseau (26) et les barres (43) présentent à la périphérie extérieure de larges gorges de section rectangulaire, gorges circulaires (39) sur les platines et rectilignes sur les barres (43) et les cloisons (33). Elles communiquent entre elles pour recevoir un joint (47) en forme de U massif (figure 12) jonctionné aux raccordements et adhérisé sur les parois intérieures des gorges.

Chaque extrémité (51, 53) des branches du U formé par le joint assure une étanchéité particulière à chaque fenêtre du boisseau, la partie du joint située entre les deux branches du U constitue un espace (55) canalisant vers l'extérieur l'éventuelle fuite provoquée par un défaut sur l'une des extrémités des branches du U. Sur les platines d'extrémités (haute et basse) délimitant le boisseau, les branches de U situées du côté de l'extrémité du boisseau sont supprimées localement (66) pour permettre la canalisation de l'éventuelle fuite vers l'extérieur (figure 16A).

L'étanchéité du boisseau (26) dans le corps (10) est obtenue par l'écrasement de ce joint (47).

C'est la forme conique du corps et du boisseau qui permet cet écrasement du joint par l'enfoncement du boisseau dans le corps.

Cet enfoncement donne lieu à des efforts axiaux importants. Le mécanisme de commande devra être conçu en fonction de ces efforts, il est évident que les efforts pour débloquer le boisseau après un temps de marche assez long, sont supérieurs à ceux nécessaires à l'écrasement du joint. Pour faciliter la rotation du boisseau dans le corps il est préférable que le joint (47) ne soit plus en contact avec la paroi du corps (10) et il faut, en outre, éviter que le joint durant son écrasement ne passe devant les arêtes des ouvertures du corps qui risqueraient de le cisailler.

La figure 12 montre dans les gorges telles que (39) ou (42) aménagées dans le boisseau le profil en U du joint (47) particulièrement étudié pour cette application.

L'adhérence du joint (47) sur les trois faces (48 A,B,C) de la gorge lui donne une très bonne tenue aux écarts de pression aux moments où il passe, libéré du corps, devant les ouvertures du corps alors que sont restés établis les courants de fluides. La double portée du joint donne une étanchéité particulière à chacune des voies d'un étage. La portée (51) établit l'étanchéité sur la voie (52), la portée (53) établit l'étanchéité sur la voie (54). Si une fuite apparaît sur la portée (51) ou sur la portée (53) elle chemine par le canal (55) que présente le joint entre ces deux portées et par les entailles (66A), vers la partie inférieure du corps d'où elle est évacuée par le robinet (23) (figure 16A). Sous l'effet de l'écrasement, le joint (47), qui n'est pratiquement pas compressible, flue, les zones plus libres (56) de la gorge reprennent l'essentiel de ce fluage ainsi les portées (51) et (53) ne sont que légèrement déformées par l'écrasement. On voit comme il a été dit au paragraphe précédent que le joint dépasse de la gorge métallique en (57) pour éviter qu'à l'écrasement les chants (49) des gorges ne viennent au contact avec la paroi intérieure du corps (10).

La figure 13 montre deux dispositions limites du joint (47) appartenant par exemple à la platine intermédiaire (31), vis à vis des tubulures (11) des étages (12) et (12A) et du corps (10).

La position (58) correspond à l'enfoncement du boisseau dans le corps pour un écrasement nul du joint, la position (59) correspond à la limite inférieure fixée pour l'enfoncement du joint une fois écrasé; l'écart (60) entre ces deux positions dépend du dimensionnement des tubulures, de leur entre axe (61) et de la largeur du joint. Pour des tubulures de 250 mm par exemple, avec une largeur de joint de 65 mm la valeur de cet écart (60) est de 80 mm. Il autorise ainsi des tolérances assez larges sur la réalisation des pièces et permet de rattraper l'affaissement que prendraient les joints dans le temps. Le système de réglage de l'enfoncement du boisseau que l'on décrira plus loin tient compte de cette valeur.

Ainsi, à aucun moment, le joint ne passera devant les arêtes (62) d'intersection des tubulures avec l'alésage du corps alors qu'il est encore écrasé; il n'y a donc pas de risque de cisaillement du joint.

La figure 14 et les valeurs qui y apparaissent montrent que, compte tenu des tolérances d'usinage requises sur l'alésage du corps (10) (plus ou moins 0,1mm) et sur les portées de joint du boisseau (plus ou moins 0,2mm) les écarts de cotes sur les rayons sont de plus ou moins 0,15mm.

Par ailleurs, des mesures pratiquées sur un appareil prototype nous ont conduits à fixer à 1 mm l'écrasement moyen du joint, ce qui revient à dire que l'écrasement local du joint peut se situer dans les cas limites entre 0,85 et 1,15 mm.

La figure 15 montre le joint (47) matérialisé par un point en position (58) de la figure 13. La valeur de la conicité de l'alésage du corps et du boisseau est de 6% (3% de pente sur la génératrice), l'enfoncement du boisseau pour que le joint (47) atteigne la position (63) avec un écrasement de 1 mm sera de 1/0,03 = 34 mm.

C'est la distance qui sépare la position (63) de la position (58).

Pour faciliter la rotation du boisseau en position relevée sans avoir recours à des guidages précis sur la rallonge (35) la course est fixée à 80 mm (c'est la distance qui sépare le joint (64) du joint (63). De ce fait le boisseau étant relevé, le joint se trouve en position (64) et son éloignement (65) de la paroi du corps est alors de (80-34) x 0,03 = 1,4 mm. Le déplacement axial pour l'approche du joint, de la position (64) à la position (58) est 80-34 = 46 mm.

La figure 16A donne une vue extérieure du boisseau (26) équipé de ses joints (47). La partie "en noir" représente les portées, comme (51) et (53); la partie hachurée, le canal (55) situé entre les portées. La portée extérieure du joint de la platine (32) est supprimée localement en (66) afin que la fuite éventuelle sur une des portées du joint atteigne la zone inférieure (67) du corps relié à l'atmosphère par le robinet (23) permettant ainsi de visualiser les fuites. La même découpe (66) est opérée sur la portée extérieure de la platine (30) pour permettre au liquide de lavage introduit dans la zone supérieure (67A) par le robinet (23A) d'atteindre par les canaux (55) la zone inférieure (67).

Après avoir été équipé du joint, ole boisseau (26) est pris de nouveau sur la machine-outil pour être usiné conique avec une assez large tolérance, les portées du joint dépassant des parties métalliques des gorges ayant été usinées en premier lieu d'une valeur convenable pour assurer un écrasement du joint sans risque que le métal du boisseau ne vienne en contact avec l'intérieur du corps.

4. Mécanisme de manœuvre du boisseau

Ce mécanisme sera décrit dans le cas particulier du permutateur à voies de 250 mm de diamètre et à 6% de conicité, déjà évoqué. Le mécanisme doit fournir au boisseau, avec un effort réduit, un mouvement de rotation de 90° dans un sens, ensuite dans l'autre pour pouvoir revenir dans la position initiale, et par exemple un mouvement axial de 46 mm pour déplacer sans effort le boisseau et ensuite pour l'enfoncer sur 34 mm dans le corps pour écraser les points de 1 mm avec un effort qui peut être important, et fournir un effort axial de déblocage des joints plus important que l'effort d'enfoncement. Le dispositif doit permettre par ailleurs le réglage de l'enfoncement du boisseau tenant compte des tolérances de fabrication et de la conservation des propriétés mécaniques du joint, réglage d'une capacité de 80 mm. Le système doit être irréversible pour qu'il ne soit pas nécessaire de maintenir sur le boisseau, durant la marche du permutateur, la force pour vaincre la poussée hydraulique.

On décrira successivement:

— le mouvement et les efforts axiaux avec le réglage de l'enfoncement
— le mouvement de rotation

La figure 17 représente le système donnant le mouvement axial de descente et de levée du boisseau.

Sur une partie filetée (77) de la vis (92), non influencée par la rotation et le déplacement longitudinal de l'axe de commande (20) qui la traverse, est disposée une noix (78) également filetée comportant deux axes ou tourillons (79) diamétralement opposés sur lesquels s'articulent par l'une de leur extrémité des biellettes jumelées (80) (la figure n'en représente qu'une seule). Par leur autre extrémité, ces biellettes (80) s'articulent sur les axes ou tourillons (81) d'un vérin hydraulique rectiligne (82). Sur ces mêmes tourillons (81) s'articulent d'autres biellettes (83) de même longueur que les biellettes (80). L'autre extrémité des biellettes (83) s'articule sur les axes tourillons (84) d'une noix (85) libre en rotation mais positionnée sur l'axe (20) par deux butées (86) appartenant à l'arbre. Un système analogue est disposé de l'autre côté de l'axe (20) avec des biellettes jumelées (87) (88) de même longueur, différente de la longueur des biellettes (80) et (83). Ces biellettes s'accouplent sur deux tourillons (89) appartenant à la chape particulière (90) du vérin (82). L'ensemble du système mobile est supporté par les tourillons (79) et (84), le quadrilatère formé par les biellettes se déformera sous l'action du vérin hydraulique, pour modifier la distance entre les tourillons (81) et (89), il y correspondra une variation de l'entraxe des tourillons (79) et (84); comme le tourillon (79) est positionné par la noix (76) sur le fourreau (71) seul le tourillon (84) verticalement se déplacera en entraînant l'axe de commande (20) par l'intermédiaire de la noix (85) et des butées sur l'axe entraînant le boisseau (26).

Sur la figure 17, le boisseau (26) est en position haute, ses joints sont libérés de la paroi du corps.

La figure 18 est une coupe partielle par un plan passant au-dessus du vérin; on y retrouve la console (18), la chape particulière (90) du vérin (82). On remarquera la surlongueur de l'axe (89) et les butées (91) sur la console (18).

Sur la vis (92) est représentée une série de trous (92A) qui permettront en utilisant une broche de mécanicien de la faire tourner dans l'alésage de la console (18). Par l'intermédiaire du filetage (77) aménagé sur le fourreau (71) et sur la noix (78), la noix se déplacera avec les tourillons (79) qui entraîneront dans un déplacement axial, sans le déformer, l'ensemble du quadrilatère, avec le vérin, et l'axe de commande (20) relié au boisseau (26). Le règlage d'enforncement du boisseau est ainsi obtenu avec une amplitude correspondante à la longueur de filetage (93) disponible sur la vis (92) (quatre vingt millimètres dans le cas évoqué).

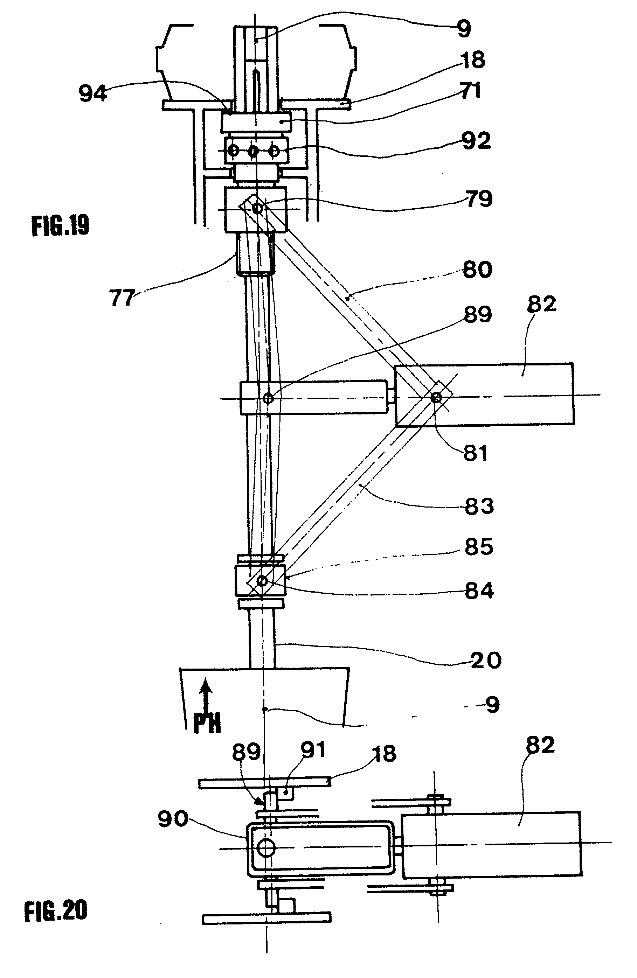

La figure 19 représente le mécanisme de commande; la tige de vérin étant rentrée, le poisseau est en position basse enfoncé dans le corps, les joints sont écrasés. On remarque alors sur la figure 20 que les extrémités des tourillons (89) viennent appuyer sur les butées (91) de la console (18) afin de limiter la course du boisseau.

Sur la figure 19, les tourillons (89) ont franchi la droite reliant les tourillons (79) aux tourillons (84). Une poussée PH exercée sur l'axe (20) par le boisseau soumis à des pressions différentielles des fluides dans le corps ne pourra pas modifier la forme du quadrilatère puisque l'essentiel de la poussée PH est reporté par l'intermédiaire des biellettes, des tourillons (79) et des fourreaux (71) au point (94) de la console (18). Seule une force résiduelle de faible valeur est transmise sur les butées (91) de la console (18) par les extrémités des tourillons (89). Le système est en équilibre, il n'est donc pas nécessaire de maintenir la pression dans le vérin (82) quand le boisseau est en position enfoncée.

Les efforts pour assurer les déplacements axiaux du boisseau, montée/descente, lorsque les joints (47) ne sont plus en contact avec la paroi (10), dépendent essentiellement des forces de frottement du mécanisme et de l'étanchéité dans le boîtier (21). Ils croissent très rapidement dès lors que les joints du boisseau viennent en contact avec la paroi du corps et que se fait l'enfoncement du boisseau dans le corps pour écraser les joints.

La pression dans le vérin dépend de la force résistante le long de l'axe de commande (20) et des diversers forces de frottement dans les articulations négligeables comparativement aux forces nécessaires à l'enfoncement.

Afin de mettre en évidence l'intérèt du système à quadrilatère, on montrera comment varie en fonction de l'angle formé par les biellettes, la force de poussée FC sur l'axe de commande (20) pour une valeur de traction constante FV donnée par la tige de vérin (figure 17). C'est l'abaque figure 25 qui donne pour compris entre 53,13° et 90° la variation de FC pour une valeur FV de 2000 daN fournie par un vérin travaillant à 100 bar.

Dès le départ pour $\alpha = 53,13°$, la capacité de FC est près de 1900 daN et elle avoisine 3000 daN pour $\alpha = 66,20°$, lorsque commence l'écrasement du joint. Pour $\alpha = 85°$, alors que le point (75) se situe à 1,5 mm de l'enfoncement total FC est passé au-delà de 12 000 daN.

Ef et Ec montrent respectivement l'évolution de l'approche (Ef) pour compris entre 53,13° et 66,20° et l'évolution de l'écrasement (Ec) du joint, en mm pour $\alpha$ compris entre 66,20° et 90°.

La figure 17 montre bien que le vérin (82) alimenté en (95) travaille côté tige pour réaliser l'enfoncement du boisseau. Pour l'extraction du boisseau le vérin alimenté en (96) fournira à FC une valeur plus importante qu'au moment de l'enfoncement, généralement du double, car dans les vérins couramment utilisés la section de la tige est sensiblement égale à la moitié de la section du piston.

La figure 2 représente le système donnant le mouvement de rotation. Le boisseau (26) est relevé par le système qui a été illustré sur la figure 17, les joints (47) ne sont plus en contact avec la paroi intérieure du corps (10).

Les robinets (23) et (23A) sont fermés car les courants de fluides n'ont pas été coupé sur les tubulures (11).

Ces courants de fluide transmettent des efforts transversaux au boisseau qui sont compensés par un guidage à l'intérieur du boîtier (21) constituant l'étanchéité de l'arbre de commande (20) et par la rallonge inférieure (35) du boisseau dans le palier (25). Grâce à l'espace (65), la rotation est alors possible sans grand effort. A l'extrémité de la console (18) est fixé un actionneur rotatif (70).

La partie mobile de l'actionneur imprise son mouvement de rotation au fourreau (71) à l'intérieur duquel coulisse l'axe de commande (20) entraîné en rotation par la clavette coulissante (72). Le fourreau (71) comporte une butée (73) le positionnant longitudinalement sur la consoole (18). Une manivelle (74) butant sur des fins de course (75) solidaires de la console limite la rotation du boisseau.

La figure 22 donne la position de ces fins de course (75).

Les figures 23 et 24 représentent une variante à la solution de la figure 21 dans laquelle l'actionneur est un véein rectiligne (76) agissant sur la bielle (74) appartenant au fourreau (71). La course est limité par les butées (75) solidaires de la console (18).

La position de la manivelle (74) ou un index placé sur le foureau (71) permet de connaître sur laquelle des deux orientations possibles se situe le boisseau.

APPLICATION

Un ensemble de huit permutateurs à un et deux étages, et à quatre voies de 250 mm de diamètre, par étage, conformes à l'invention, a été mis en service dans une usine de production d'alumine à partir de bauxite selon le procédé BAYER.

Ila ont été placés sur des canalisations transportant des suspensions de trihydroxyde d'aluminium, à plusieurs centaines de grammes par litre, dans de l'aluminate de sodium à teneur élevée en $Na_2O$ et à une température pouvant atteindre 85–90°C, et sous un débit de l'ordre de 600 m³/h.

A raison d'une à plusieurs manœuvre par jour, et sans qu'aucun entretien n'ait été nécessaire, ils fonctionnent de façon tout à fait satisfaisante, et après plusieurs mois, on n'a noté aucune augmentation des fuites, d'ailleurs insignifiantes au niveau du robinet de purge (23).

Un permutateur à deux fois quatre voies de 350 mm de diamètre, prévu pour des débits voisins de 1000 m³/h, mis en service plus récemment, a assuré jusqu'à ce jour un service sans défaillance, et un fonctionnement parfait.

## Revendications

1. Permutateur rotatif à boisseau conique permettant de modifier l'alimentation de l'appareil auquel il est affecté en inversant les fluides dans les conduits, ou en inversant le sens de circulation des fluides dans les conduits ou les deux simultanément, sans nécessiter l'arrêt des courants de fluides et sans provoquer de mélange notable des différents fluides au moment de la permutation et comportant:

   – un corps principal (10) creux, de révolution, muni d'une pluralité de tubulures (11) d'entrée et de sortie des fluides destinés à être raccordées à des appareils par des canalisations d'arrivée et de départs desdits fluides, ce corps (10) étant muni, à sa partie supérieure, d'une plaque de fermeture (17) permettant la mise en place du boisseau et à sa partie inférieure d'un fond fermé (15).

   – un boisseau conique de révolution (26) ayant la même conicité que l'intérieur du corps (10), l'axe (9) du corps et du boisseau étant confondus, ledit boisseau étant fermé à ses extrémités par des platines (30) et (32) et comportant au moins un étage de permutation constitué par une pluralité de fenêtres (50) coopérant avec l'ouverture des tubulures (11) du corps, et au moins une cloison interne (33) délimitant au moins deux espaces distincts constituant les voies de l'étage permettant la circulation interne des fluides sans communication entre eux.

   – un moyen de déplacement (19) du boisseau (26) selon sons axe (9) pour permettre l'enfoncement et le dégagement dudit boisseau de la paroi interne du corps (10).

   – un moyen de rotation (70) du boisseau (26) autour de son axe (9) pour permettre le changement d'orientation.

   – un moyen d'étanchéité (47) disposé autour des fenêtres (50) du boisseau (26), caractérisé en ce que: le moyen d'étanchéité (47) du boisseau (26) dans le corps (10) est un joint élastomère (47) à double portée ayant la forme générale d'un U, les parties extérieures du U s'appuyant sur les faces (48) dces gorges (39) et (42) où il est adhérisé, l'extrémité de chacune des branches du U formant les portées (51) et (53) coopérant avec l'appui sur la paroi intérieure du corps pour assurer l'étanchéité autour de chaque fenêtre (50), la partie intérieure en U formant un canal (55) canalisant les fuites vers l'espace (67) aménagé à la partie inférieure du corps et en ce que le moyen de déplacement axial (19) supporté par une console (18) fixée à un couvercle (17) fermant la partie inférieure du corps est un ensemble de quatre couples de biellettes (80, 83, 87, 88) formant un double qaudrilatère dont deux couples de biellettes (87, 88) sont plus courtes que les deux autres (80, 83), pour obtenir la position de verrouillage irreversible.

2. Permutateur, selon revendication 1, caractérisé en ce que le joint d'étanchéité (47) constitue par sa forme une étanchéité vis à vis des zones (67) et (67A) situées à la partie inférieure et à la partie supérieure du corps, étanchéité qui est interrompue sur de courtes portions (66) sur la périphérie extérieure des platines (30) et (32) elle-même munie d'entailles (46) pour former la continuité du canal (55) entre les zones (67) et (67A) pour l'évacuation des fuites et du liquide de rinçage vers l'extérieur du corps par le robinet (23).

3. Permutateur, selon revendication 1, caractérisé en ce que le boisseau comporte un canal interne (36) mettant en relation l'espace supérieur (67A) et l'espace inférieur (67) avec l'atmosphère, lorsque durant l'utilisation du permutateur le robinet (23) est laissé ouvert pour contrôler la fuite, et permettant ainsi d'utiliser un débit de liquide de rinçage plus important.

4. Permutateur selon revendication 1, caractérisé en ce que les deux quadrilatères formés par les quatres couples de biellettes (80, 83, 87, 88) sont disposés simétriquement dans 2 plans parallèles à l'axe (9) et reliés par un axe fixe supérieur ou tourillon (79) à la console (18) par axe mobile verticalement (84) à la tige (20) de manœuvre du boisseau, les axes latéraux étant reliés entre eux par le vérin hydraulique de commande, l'axe (81) étant articulé sur le corps du vérin, l'axe (89) étant articulé sur la chape particulière (90) qui évite l'intersection avec la tige (20), l'axe mobile verticalement (84) étant solidaire d'une noix (85) enfilée sur la tige (20).

5. Permutateur, selon revendication 4, caractérisé en ce que l'axe fixe supérieur (79) peut être déplacé sur la console au moyen d'une vis (92) pour réaliser une approche afin d'obtenir l'écrasement optimum du joint (47) en position verrouillée.

6. Permutateur selon revendication 4, caractérisé en ce que l'ensemble du mécanisme d'enfoncement et de soulèvement du boisseau est suspendu à l'axe fixe supérieur (79) et que les contraintes résiduelles amenées à la tige (20) par exemple sont réduites.

7. Permutateur selon revendication 4, caractérisé en ce que la noix (85) qui supporte l'axe mobile verticalement (84), occupe sur l'arbre (20) une position fixe déterminée par deux butées (86).

8. Permutateur selon revendications 1 et 4, caractérisé en ce que la console (18) comporte deux butées (91) sur lesquelles s'appuie l'axe (89) des biellettes (88) pour assurer l'irréversibilité du système quadrilatère lorsque le boisseau atteint sa position limite d'enfoncement dans le corps (10).

9. Permutateur, selon revendication 1, 4 et 8, caractérisé en ce que lorsque le boisseau est en position limite d'enfoncement, l'angle formé par les biellettes (87) et (88) à l'axe (89) est supérieur à 180° de sorte que la poussée hydraulique s'exerçant sous le boisseau tend à appliquer l'axe (89) sur les butées (91) de la console (18) rendant ainsi le système irréversible.

10. Permutateur selon revendication 1, caractérisé en ce qu'il comporte au moins deux étages (12) et (12A) chaque étage du boisseau étant séparé de l'autre par une platine (31) disposée perpendiculairement à l'axe (9), chaque étage du corps (10) comportant quatre tubulures (11) disposées à 90° l'une de l'autre coopérant avec les fenêtres (50) du boisseau et dont les axes de tubulures d'un étage sont décalées de 45° avec les axes des tubulures de l'étage inférieur.

**Claims**

1. A rotary switching device having a conical control member for modifying the supply to the apparatus with which it is associated by reversing the fluids in the conduits or by reversing the direction of circulation of the fluids in the conduits or both simultaneously without the need to stop the flows of fluids and without causing substantial mixing of the different fluids at the time of the switching action and comprising:

  – a principal hollow body (10) of revolution provided with a plurality of ports (11) for the inlet and outlet of the fluids, which are intended to be connected to apparatuses by ducts for the supply and discharge of said fluids, said body (10) being provided in its upper part with a closure plate (17) for setting the control member in position and in its lower part with a closed bottom (15),

  – a conical control member (26) of revolution having the same conicity as the interior of the body (10), the axis (9) of the body and the control member being coincident, said control member being closed at its ends by plates (30 and 32) and comprising at least one switching stage formed by a plurality of apertures (50) co-operating with the openings of the ports (11) of the body, and at least one internal partition (33) delimiting at least two separate spaces constituting the passages of the stage permitting internal circulation of the fluids without communication between them,

  – a means (19) for displacement of the control member (26) along its axis (9) to permit said control member to be engaged into and released from the internal wall of the body (10),

  – a means (70) for rotating the control member (26) about its axis (9) to permit the change in orientation, and

  – a sealing means (47) disposed around the apertures (50) of the control member (26), characterised in that:

the sealing means (47) for sealing the control member (26) in the body (10) is an elastomer seal (47) having a double bearing surface, in the general shape of a U, the external parts of the U-shape bearing against the faces (48) of the grooves (39 and 42) to which it is caused to adhere, the end of each of the limbs of the U-shape forming the bearing surfaces (51 and 53) co-operating with the support on the internal wall of the body to provide the sealing effect around each aperture (50), the inner U-shaped part forming a duct (55) for directing leaks towards the space (67) provided in the lower part of the body, and the axial displacement means (19) supported by a bracket (18) fixed to a cover (17) closing the lower part of the body is an assembly of four pairs of links (80, 83, 87, 88) forming a double quadrilateral, of which two pairs of links (87, 88) are shorter than the other two pairs (80, 83) to produce the irreversible locking position.

2. A switching device according to claim 1, characterised in that the seal (47) by virtue of its shape forms a seal in relation to the zones (67, 67A) disposed in the lower part and the upper part of the body, the seal being interrupted over short portions (66) at the external periphery of the plates (30 and 32), which is itself provided with notches (46) to form the continuity of the duct (55) between the zones (67, 67A) for the discharge of leaks and the rinsing liquid to the exterior of the body by way of the tap (23).

3. A switching device according to claim 1, characterised in that the control member comprises an internal duct (36) communicating the upper space (67A) and the lower space (67) with the atmosphere when, during use of the switching device, the tap (23) is left open to monitor leakage and thus permitting the use of a higher rinsing liquid flow rate.

4. A switching device according to claim 1, characterised in that the two quadrilaterals formed by the four pairs of links (80, 83, 87, 88) are disposed symmetrically in two planes parallel to the axis (9) and connected by an upper fixed axis or trunnion (79) to the bracket (18), by the vertically movable axis (84) to the rod (20) for operating the control member, the lateral axes being connected together by the hydraulic control jack, the axis (81) being pivotally connected to the body of the jack, the axis (89) being pivotally connected to the particular fork joint member (90) which avoids intersection with the rod (20), and the vertically movable axis (84) being fixed with respect to a nut (85) which is threaded on to the rod (20).

5. A switching device according to claim 4, characterised in that the upper fixed axis (79) can be displaced on the bracket by means of a screw (92) to produce an approach movement in order to provide for optimum crushing of the seal (47) in the locked position.

6. switching device according to claim 4, characterised in that the assembly of the mechanism for engaging and lifting the control member is suspended from the fixed upper axis (79) and that the residual stresses applied to the rod (20) for example are reduced.

7. A switching device according to claim 4, characterised in that the nut (85) which supports the vertically movable axis (84) occupies on the shaft (20) a fixed position determined by two abutments (86).

8. A switching device according to claims 1 and 4, characterised in that the bracket (18) comprises two abutments (91) against which the axis (89) of the links (88) bears to ensure irreversibility of the quadrilateral system when the control member reaches its limit position of being engaged into the body (10).

9. A switching device according to claims 1, 4 and 8, characterised in that, when the control member is in the limit position of engagement, the angle formed by the links (87 and 88) at the axis (89) is greater than 180° so that the hydraulic thrust force which is applied beneath the control member tends to press the axis (89) against the abutments (91) of the brack-

et (18), thus making the system irreversible.

10. A switching device according to claim 1, characterised in that it comprises at least two stages (12 and 12A), each stage of the control member being separated from the other by a plate (31) which is disposed pedrpendicularly to the axis (9), each stage of the body (10) comprising four ports (11) which are disposed at 90° relative to each other and co-operating with the apertures (50) of the control member and wherein the axes of the ports of one stage are displaced at 45° with respect to the axes of the ports of the lower stage.

## Patentansprüche

1. Drehbarer Umschalter mit Kegelküken, der ermöglicht, die Zuführung des Gerätes an dem er angeordnet ist zu verändern, unter Umkehrung der Fluide in den Leitungen oder durch beides gleichzeitig, ohne das Anhalten der Fluidströme zu fordern und ohne eine wesentliche Mischung der verschiedenen Fluide während der Umschaltung hervorzurufen mit:
   - einem hohlen Drehhauptkörper (10), der mit einer Mehrzahl von Eingangs- und Ausgangsrohrstutzen (11) der Fluide versehen ist, die dazu bestimmt sind durch Zuführ- und Abführleitungen der Fluide mit Geräten verbunden zu werden, wobei der Körper (10) an seinem oberen Bereich mit einer Schließplatte (17) versehen ist, die die Anordnung des Kegelkükens und in seinem unteren Bereich eines geschlossenen Bodens (15) ermöglicht ist;
   - einem Drehkegelküken (26), das dieselbe Konizität aufweist wie das Innere des Körpers (10), wobei die Achse (9) des Körpers und des Kegelkükens zusammenfallen, das Kegelküken an seinen Enden durch Platten (30) und (32) verschlossen ist und wenigstens eine Umschaltebene aufweist, die durch eine Mehrzahl von Fenstern (50) gebildet ist, die mit der Öffnung der Rohrstutzen (11) des Körpers zusammenwirken, und aus wenigstens einer inneren Trennwand (33) gebildet ist, die wenigstens zwei getrennte Räume begrenzt, die die Pfade der Ebene bilden, die die innere Zirkulation der Fluide ohne Verbindung zwischen ihnen ermöglicht;
   - einer Bewegungseinrichtung (19) des Kegelkükens (26) entlang seiner Achse (9) um das Eindringen und Herausbringen des Kegelkükens von der inneren Seitenwand des Körpers (10) zu ermöglichen;
   - einer Dreheinrichtung (70) des Kegelkükens (26) um seine Achse (9), um eine Richtungsänderung zu ermöglichen;
   - einer Dichtungseinrichtung (47), die um die Fenster (50) des Kegelkükens (26) angeordnet ist, dadurch gekennzeichnet, daß:
   die Dichtungseinrichtung (47) des Kegelkükens (26) in dem Körper (10) eine elastomere Dichtung (47) mit doppelter Anlage ist, die allgemein U-Form aufweist, wobei die äußeren Bereiche des U sich auf den Seiten (48) der Auskehlungen (39) und (42) abstützen, wo sie angeklebt ist, wobei die Enden eines jeden Schenkel des U die Stützen (51) und (53) bilden, die mit dem Anschlag auf der inneren Seitenwand des Körpers zusammenwirken, um die Dichtheit um jedes Fenster (50) herum sicherzustellen, wobei der innere Bereich des U einen Kanal (55) bildet, der die Verluste zu dem Raum (67) leitet, der im unteren Bereich des Körpers ausgebildet ist, und daß die Einrichtung der axialen Bewegung (19), die von einer Konsole (18) getragen wird, die an einem Deckel (17) befestigt ist, der den unteren Bereich des Körpers schließt und eine Anordnung von vier Schwingarmpaaren (80, 83, 87, 88), die ein doppeltes Gelenkviereck bilden, von dem zwei Schwingarmpaare (87, 88) kürzer sind als die beiden anderen (80, 83), um die unverwechselbare Verriegelungsstellung zu erreichen.

2. Umschalter nach Anspruch 1, dadurch gekennzeichnet, daß die Dichtungsverbindung (47) durch ihre Form eine Dichtung gegenüber Zonen (67) und (67A) bildet, die am unteren Bereich und am oberen Bereich des Körpers angeordnet sind, einer Dichtung, die auf kurzen Stücken (66) auf dem Außenumfang der Platten (30) und (32) unterbrochen ist, wobei sie selbst mit Kerben (46) versehen ist, um die Fortsetzung des Kanals (55) zwischen den Zonen (67) und (67A) zu bilden für die Ausbringung der Undichtigkeiten und der Spülungsflüssigkeit außerhalb des Körpers durch den Hahn (23) zu bilden.

3. Umschalter nach Anspruch 1, dadurch gekennzeichnet, daß das Kegelküken einen inneren Kanal (36) aufweist, der den oberen Raum (67A) und den unteren Raum (67) mit der Atmosphere in Verbindung setzt, wenn während der Verwendung des Umschalters der Hahn (23) offengelassen wird, um die Undichtigkeit zu kontrollieren, und so die Verwendung einer größeren Spülflüssigkeitsrate zu erlauben.

4. Umschalter nach Anspruch 1, dadurch gekennzeichnet, daß die beiden Gelenkvierecke, die durch die vier Schwingarmpaare (80, 83, 87, 88) gebildet sind, symmetrisch in zwei parallelen Ebenen bezüglich der Achse (9) angeordnet sind und durch eine obere feste Achse oder Drehachse (79) mit der Konsole (18) durch eine vertikal bewegliche Achse (84) mit der Bedienungsstange (20) des Kegelkükens verbunden sind, wobei die seitlichen Achsen miteinander durch das hydraulische Stellglied verbunden sind, wobei die Achse (81) auf dem Stellgliedkörper geschwenkt wird, die Achse (89) auf der besonderen Abdeckkappe (90) angelenkt ist, die die Überschneidung mit der Stange (20) vermeidet, wobei die vertikal bewegbare Achse (84) mit einem Anschlag (85) verbunden ist, der auf der Stange (20) angebracht ist.

5. Umschalter nach Ansprucdh 4, dadurch gekennzeichnet, daß die obere feste Achse (29) auf der Konsole mittels einer Schraube (92) verschiebbar ist, um eine Annäherung zu erzeugen, um die optimale Zusammendrückung der Dichtung (47) in der vedrriegelten Position zu erreichen.

6. Umschalter nach Anspruch 4, dadurch gekennzeichnet, daß der gesamte Mechanismus der Einbringung und der Anhebung des Kegelkükens an der festen oberen Achse (79) angehängt ist, und daß die beispielsweise auf die Stange (20) aufge- brachten Restspannungen reduziert sind.

7. Umschalter nach Anspruch 4, dadurch gekennzeichnet, daß der Anschlag (85), der die vertikal mobile Achse (84) trägt, auf der Welle (20) eine feste Stellung einnimmt, die durch zwei Anschläge (86) festgelegt ist.

8. Umschalter nach Anspruch 1 und 4, dadurch gekennzeichnet, daß die Konsole (18) zwei Anschläge (91) aufweist, auf die sich die Achse (89) der Schwingarme (88) abstützt, um die Unverwechselbarkeit des Viergelenksystems sicherzustellen, wenn das Kegelküken seine Eintauchendstellung in den Körper (10) erreicht.

9. Umschalter nach Anspruch 1, 4 und 8, dadurch gekennzeichnet, daß, wenn das Kegelküken sich in seiner Endeintauchstellung befindet, der Winkel, der durch die Schwingarme (87 und 88) bezüglich der Achse (89) gebildet ist größer ist als 180° derart, daß der hydraulische Ausdruck, der unter dem Kegelküken wirkt, dahin tendiert, die Achse (89) auf die Anschläge (89) der Konsole (18) zu drücken, was so das System unverwechselbar macht.

10. Umschalter nach Anspruch 1, dadurch gekennzeichnet, daß er wenigstens zwei Etagen (12) und (12A) aufweist, wobei jede Etage des Kegelkükens von der anderen durch eine Platte (31) getrennt ist, die senkrecht zur Achse (9) angeordnet ist, wobei jede Etage des Körpedrs (10) vier Rohrstutzen (11) aufweist, die 90° gegeneinander versetzt angeordnet sind, wobei sie mit den Fenstern (50) des Kegelkükens zusammenwirken und von denen die Achsen der Rohrstutzen einer Etage bezüglich der Achsen der Rohrstutzen der unteren Etage um 45° versetzt sind.

FIG.1

FIG.2

**FIG.3**

**FIG.4**

**FIG.5**

| FIG. | changement de | |
|---|---|---|
| | fluide | sens |
| 3 | oui | non |
| 4 | non | oui |
| 5 | oui | oui |

FIG.6

FIG.7

FIG.8

FIG.0

26 →

20
34
30
23A
33
36
31
33
32
36
35

FIG.10

39
38
37
30
33
41
40
42
41

FIG.11

45
46
30
33
44
43
50
45
31
43
33
42
43
32
46
45

EP 0 210 936 B1

FIG.12

FIG.14

FIG.13

FIG.15

FIG.16

COUPE DD

**FIG.17**

**FIG.18**

FIG.19

FIG.20

FIG. 21

FIG. 22

FIG. 23

FIG. 24

# FIG. 25